# EUROPEAN PATENT SPECIFICATION

(11) **EP 3 267 032 B1**
(45) Date of publication and mention of the grant of the patent: **21.10.2020**
(21) Application number: 16178428.5
(22) Date of filing: 07.07.2016
(51) Int. Cl.: F03D 1/06, F03D 80/70

(54) **BLADE BEARING ARRANGEMENT FOR A WIND TURBINE**
BLATTLAGERANORDNUNG FÜR EINE WINDTURBINE
AGENCEMENT DE PALIER DE PALES POUR UNE ÉOLIENNE

(43) Date of publication of application: 10.01.2018
(73) Proprietor: Siemens Gamesa Renewable Energy A/S, 7330 Brande (DK)
(72) Inventor: Eriksen, Uffe, 8700 Horsens (DK); Laursen, Christian, 8722 Hedensted (DK); Munk-Hansen, Thorkil, 7323 Give (DK)
(74) Representative: Aspacher, Karl-Georg

(56) References cited:
- EP-A1- 2 711 568
- WO-A1-2015/128426
- WO-A1-2017/194545
- DE-A1- 2 855 992
- DE-A1- 4 432 986
- GB-A- 2 479 380
- US-A1- 2016 069 328

## Description

The present invention relates to a wind turbine.

Modern wind turbine rotor blades are built from fiber-reinforced plastics. A rotor blade typically comprises an airfoil having a rounded leading edge and a sharp trailing edge. The rotor blade is connected with its blade root to a hub of the wind turbine. The rotor blade is connected to the hub by means of a pitch bearing that allows a pitch movement of the rotor blade. The pitch bearing normally is a rolling element bearing. A longer rotor blade experiences more forces of the wind that interacts with the rotor blade. The forces are transferred over the pitch bearing of the rotor blade to the hub.

DE 28 55 992 A1 describes a bearing assembly which is intended for two axially aligned components which are rotationally adjustable relative to one another and are subject to high load in both axial and radial direction, such as found in the bearings of rotor blades rotationally adjustable on the hub of a large wind-driven power unit. The blades are carried in two bearings. The bearings are connected to the blade and hub respectively via two mutually overlapping three-spoked conical structures with the bearings at the cone apices, the apex of each cone lying in the base plane of the other. The structures are rigidly or releasably connected to blade and hub respectively at their bases.

WO 2015/128426 A1 discloses a wind turbine rotor comprising a rotor hub, one or more blades mounted on the rotor hub, wherein each blade comprises a non-pitchable portion and a pitchable portion, and a blade pitch system with a pitch bearing arrangement. The pitch bearing arrangement has a pitch shaft and two or more bearings provided on said pitch shaft. The two or more bearings are spaced from each other in the axial direction of the pitch shaft. The pitchable portion is connected to a first end of the pitch shaft so as to be integrally rotatable therewith.

WO 2017/194545 A1 describes a wind turbine rotor blade, comprising a blade root section and a blade tip, a flange arranged on the blade root side for fastening the rotor blade to a rotor hub of a wind turbine, and a pitch bearing for adjusting the angle of attack of the rotor blade.

It is one object of the present invention to provide an improved wind turbine.

Accordingly, a wind turbine, comprising a hub, a blade shaft which is connected to the hub, a rotor blade which is connected to the blade shaft, a fixed bearing arrangement which is arranged at a blade end of the blade shaft, and a floating bearing arrangement which is arranged at a hub end of the blade shaft, is provided, wherein the bearing arrangements enable a rotational movement of the rotor blade relative to the blade shaft, and wherein a first bearing shell of the floating bearing arrangement is provided with a gear ring which can be used to adjust a pitch angle of the rotor blade.

The blade end of the blade shaft can be named distal end because it is positioned in a distance from the hub. The hub end can be named proximal end of the blade shaft because it is proximal to the hub. The blade end can also be named tip. The blade end can be pointed. In particular, the rotor blade is rotatably supported at the blade shaft by means of the fixed bearing arrangement and the floating bearing arrangement. The rotor blade preferably has a blade root which is fixed to the blade shaft. The blade shaft is preferably arranged inside the blade root. A blade arrangement of the wind turbine comprises preferably the hub, the blade shaft, the bearing arrangements and the blade. The wind turbine preferably comprises more than one rotor blade.

In particular, the wind turbine comprises three or more rotor blades. Each rotor blade has its own blade shaft. The blade shaft extends between the hub end which is fixed to the hub and the pointed blade end. Both bearing arrangements are preferably plain bearings or sliding bearings. A fixed bearing is a bearing that can transfer loads both in a radial and in an axial direction. A floating bearing is a bearing that can transfer loads only in a radial but not in an axial direction.

The advantages of the wind turbine are the following. A better distribution of the loads is achieved. Less material is needed in the blade root and in the bearing arrangements. The serviceability is better compared to bearings with rolling elements. At rotor blades with 100 m length or more, several meters of deflection at the tip of the rotor blade are expected. This leads to high forces at the blade root and to a high misalignment in bearings at the blade shaft. Plain bearings are less sensitive to this misalignment.

According to an embodiment, the fixed bearing arrangement is positioned between the blade shaft and the rotor blade, and the floating bearing arrangement is also positioned between the blade shaft and the rotor blade. Preferably, the fixed bearing arrangement and the floating bearing arrangement together form a pitch bearing arrangement of the wind turbine. The rotor blade can be rotated relative to the blade shaft to adjust a pitch angle of the rotor blade.

According to a further embodiment, the fixed bearing arrangement comprises a radial bearing for transferring radial forces, and an axial bearing for transferring axial forces. The fixed bearing arrangement can comprise two axial bearings which are arranged at both sides of the radial bearing. An axial direction is preferably oriented parallel to a middle axis of the fixed bearing arrangement. A radial direction is preferably oriented perpendicular to the axial direction.

According to a further embodiment, the radial bearing comprises a first bearing shell that is connected to an adaptor wall of the rotor blade, and a second bearing shell that is connected to the blade shaft. The second bearing shell can be part of the blade shaft. The blade shaft can have a higher thickness in the area of the second bearing shell.

According to a further embodiment, the radial bearing and/or the axial bearing comprises exchangeable bearing pads. The exchangeable bearing pads secure a longer overall lifetime of the wind turbine or the blade arrangement. The serviceability is better compared to bearings with rolling elements. The bearing pads can be made of metal, for example copper, plastic, for example nylon, or composite materials.

According to a further embodiment, the radial bearing and/or the axial bearing is a plain bearing. A plain bearing has no rolling elements. A plain bearing can also be named as sliding bearing.

According to a further embodiment, the radial bearing has a diameter of more than 50 cm, preferably of more than 80 cm, and a length of more than 40 cm, preferably of more than 80 cm. The diameter and the length of the radial bearing are arbitrarily.

According to a further embodiment, the axial bearing has a length of more than 5 cm. The length can also be smaller than 5 cm.

According to a further embodiment, the floating bearing arrangement comprises a radial bearing for transferring radial forces. The radial bearing preferably is a plain bearing.

According to a further embodiment, the radial bearing comprises exchangeable bearing pads. The exchangeable bearing pads secure a longer overall lifetime of the wind turbine or the blade arrangement. The serviceability is better compared to bearings with rolling elements. The bearing pads can be made of metal, for example copper, plastic, for example nylon, or composite materials.

According to a further embodiment, the radial bearing is a plain bearing. This improves the durability of the radial bearing. Further, the maintenance of the radial bearing is simplified.

According to a further embodiment, the radial bearing has a diameter of more than 4 m, and a length of more than 10 cm, preferably of more than 25 cm. The diameter and the length of the radial bearing are arbitrarily.

According to a further embodiment, the blade shaft is hollow and/or the blade shaft is conical. The blade shaft can be casted. The blade shaft can be made of a metal, for example aluminum. "Conical" means that a cross-section of the blade shaft decreases from the hub end in direction of the blade end. Alternatively, the blade shaft can be cylindrical.

According to a further embodiment, the blade shaft is arranged at least partly inside the rotor blade. In particular, the blade shaft is arranged inside the root of the rotor blade.

According to a further embodiment, the fixed bearing arrangement and/or the floating bearing arrangement comprises copper, nylon or composite materials and/or wherein the fixed bearing arrangement and/or the floating bearing arrangement is lubricated. The bearing arrangements can have a sealing to prevent grease or oil from escaping and water from coming in. Suitable materials for the bearing pads can be copper, nylon or composite materials, preferably Ertalon LFX also known as paxx or pcb based composite material. Lubrication of nylon can be done with grease, in particular with pcb based grease. Composite materials can run without grease.

"Wind turbine" presently refers to an apparatus converting the wind's kinetic energy into rotational energy, which may again be converted to electrical energy by the apparatus.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

The invention is defined by the appended claims.

Further embodiments, features and advantages of the present invention will become apparent from the subsequent description and dependent claims, taken in conjunction with the accompanying drawings, in which:
Fig. 1 is a perspective view of a wind turbine according to one embodiment;
Fig. 2 is a perspective view of a wind turbine rotor blade according to one embodiment;
Fig. 3 is a sectional view of a blade arrangement according to one embodiment;
Fig. 4 is a sectional view of a fixed bearing arrangement according to one embodiment; and
Fig. 5 is a perspective view of a floating bearing arrangement according to one embodiment

In the Figures, like reference numerals designate like or functionally equivalent elements, unless otherwise indicated.

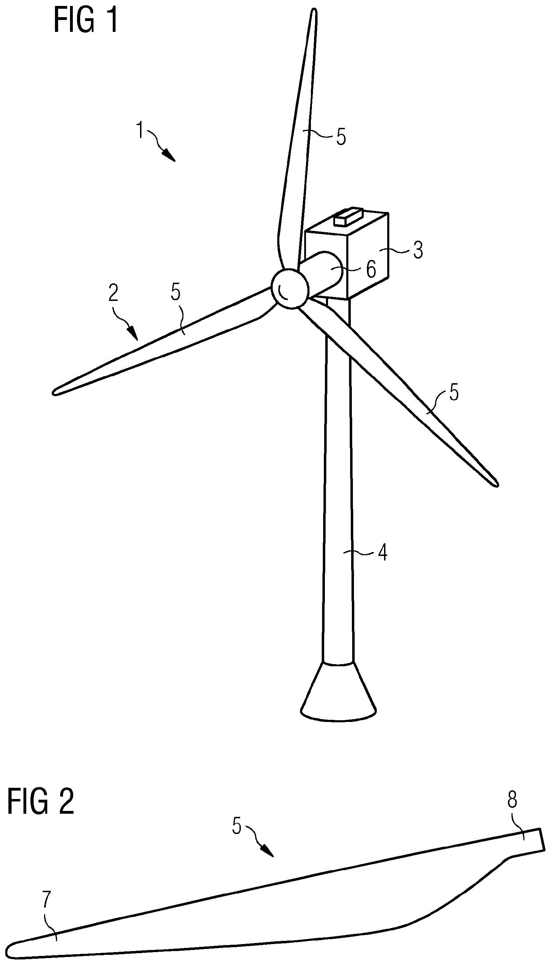

Fig. 1 shows a wind turbine 1 according to an embodiment.

The wind turbine 1 comprises a rotor 2 connected to a generator (not shown) arranged inside a nacelle 3. The nacelle 3 is arranged at the upper end of a tower 4 of the wind turbine 1.

The rotor 2 comprises three rotor blades 5. The rotor blades 5 are connected to a hub 6 of the wind turbine 1. Rotors 2 of this kind may have diameters ranging from, for example, 30 to 160 meters or even more. The rotor blades 5 are subjected to high wind loads. At the same time, the rotor blades 5 need to be lightweight. For these reasons, rotor blades 5 in modern wind turbines 1 are manufactured from fiber-reinforced composite materials. Therein, glass fibers are generally preferred over carbon fibers for cost reasons. Oftentimes, glass fibers in the form of unidirectional fiber mats are used.

Fig. 2 shows a rotor blade 5 according to one embodiment.

The rotor blade 5 comprises an aerodynamically designed portion 7, which is shaped for optimum exploitation of the wind energy and a blade root 8 for connecting the rotor blade 5 to the hub 6.

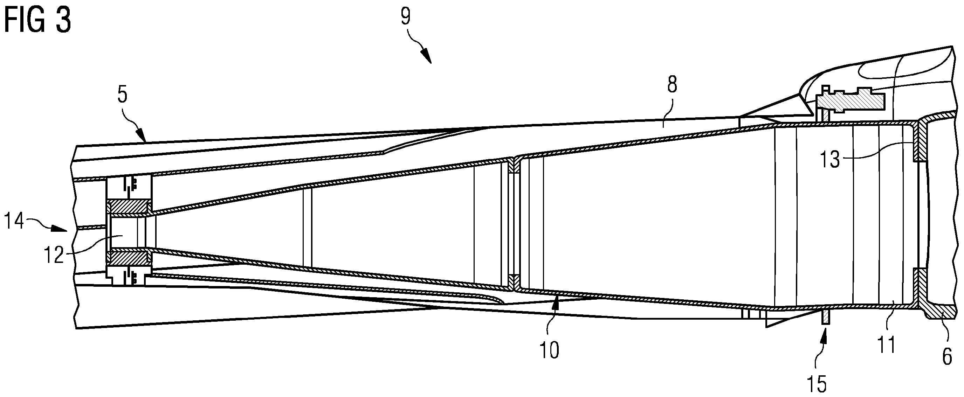

Fig. 3 shows a sectional view of a blade arrangement 9 according to one embodiment.

The blade arrangement 9 comprises the hub 6, a blade shaft 10 which is fixed to the hub 6 and the rotor blade 5. The blade arrangement 9 can comprise several blade shafts 10 and several rotor blades 5. For example, the blade arrangement 9 can comprise three rotor blades 5 and three blade shafts 10, wherein each blade shaft 10 is assigned to one rotor blade 5. The blade shaft 10 is fixed to the hub such that it cannot be rotated relative to the hub 6. The blade arrangement 9 is part of the wind turbine 1. The blade shaft 10 is arranged at least partly inside the rotor blade 5.

The blade shaft 10 is conical. That means the blade shaft 10 has a broad hub end 11 which is attached to the hub 6 and a pointed tip or blade end 12 which is arranged inside the blade root 8 of the rotor blade 5. From the hub end 11 to the blade end 12 a cross sectional area of the blade shaft 10 continuously decreases. The blade shaft 10 is provided with a disc-shaped interface 13 which is arranged at the hub end 11. The interface 13 is fixed to the hub 6. For example, the interface 13 is fixed to the hub 6 by means of bolts and/or screws. The blade shaft 10 is hollow. This lowers the weight of the blade shaft 10.

The rotor blade 5 is connected to the blade shaft 10. The blade shaft 10 reaches a certain predetermined length into the rotor blade 5. The rotor blade 5 is connected at least at two areas to the blade shaft 10. One area is at the hub end 11 or the blade root 8 of the rotor blade 5 and one area is at the blade end 12 of the blade shaft 10. The connection is achieved by a fixed bearing arrangement 14 which is arranged at the blade end 12 of the blade shaft 10 and a floating bearing arrangement 15 which is arranged at the blade root 8 of the rotor blade 5 or at the hub end 11 of the blade shaft 10. The bearing arrangements 14, 15 enable a rotational movement of the rotor blade 5 relative to the blade shaft 10. Thus, a pitch angle of the rotor blade 5 can be adjusted.

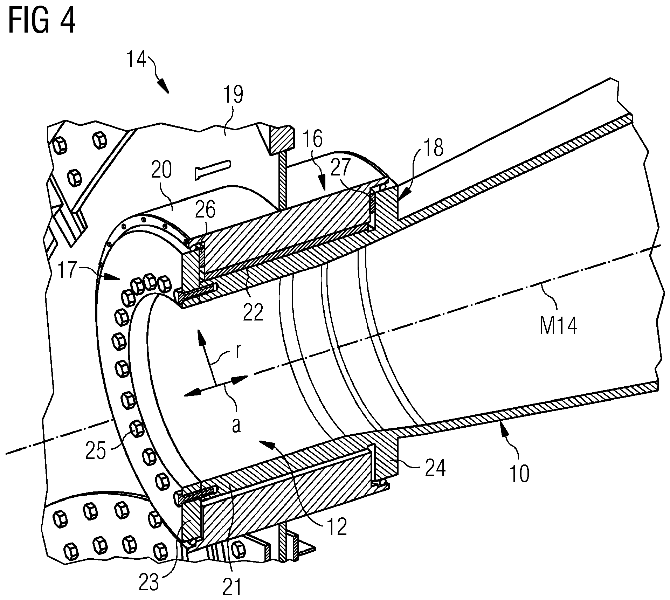

The fixed bearing arrangement 14 is shown in detail in Fig. 4.

The fixed bearing arrangement 14 is positioned between the blade shaft 10 and the rotor blade 5. The fixed bearing arrangement 14 supports the rotor blade 5 at the blade end 12 of the blade shaft 10. The fixed bearing arrangement 14 comprises a radial bearing 16 and axial bearings 17, 18 to transfer radial and axial forces. The bearings 16, 17, 18 are plain bearings. That means the bearings 16, 17, 18 have no rolling elements. The radial bearing 16 can transfer loads only in a radial direction r but not in an axial direction a. The axial bearings 17, 18 can transfer loads only in the axial direction a but not in the radial direction r. The axial direction a is positioned parallel to a middle axis M14 of the fixed bearing arrangement 14. The radial direction r is positioned perpendicular to the middle axis M14 or to the axial direction a.

The rotor blade 5 comprises an adaptor wall 19 to support the fixed bearing arrangement 14. The radial bearing 16 comprises a first bearing shell 20 that is connected to the adaptor wall 19 of the rotor blade 5. The radial bearing 16 also comprises a second bearing shell 21 that is connected to the blade shaft 10 or is part of the blade shaft 10. The second bearing shell 21 can be connected to an outer surface of the blade shaft 10. The second bearing shell 21 can also be connected to the blade end 12 of the blade shaft 10. The blade shaft 10 is hollow and can be casted. The blade shaft 10 can have a higher wall thickness in the area of the radial bearing 16.

Between the first bearing shell 20 and the second bearing shell 21 is arranged a plurality of bearing pads 22. The bearing pads 22 are exchangeable. Suitable materials for the bearing pads 22 can be copper, nylon or composite materials, preferably Ertalon LFX also known as paxx or pcb based composite material. Lubrication of nylon can be done with grease, in particular with pcb based grease. Composite materials can run without grease. The radial bearing 16 can have a diameter of more than 50 cm, preferably of more than 80 cm. A length of the radial bearing 16 can be more than 40 cm, preferably more than 80 cm.

Each axial bearing 17, 18 has a disc-shaped cover 23, 24. The cover 24 is part of the blade shaft 10 and the cover 23 is an extra part which is fixed to a face of the blade end 12 by means of fixing elements 25, in particular screws. Between each cover 23, 24 and the first bearing shell 20 are arranged bearing pads 26, 27. The bearing pads 26, 27 can be made of the same materials as the bearing pads 22. Each axial bearing 17, 18 can have a length of more than 5 cm.

The bearings 16, 17, 18 can have a sealing to prevent grease or oil from escaping and water from coming in. The bearings 16, 17, 18 can also be placed inside the blade shaft 10 (not shown). The fixed bearing arrangement 14 can be one unit that is exchangeable so that no exchange of the bearing pads 22, 26, 27 is necessary. This unit can be exchanged through the blade shaft 10, the hub 6 and the nacelle 3 and can be hoisted down to the ground by means of a crane. The blade shaft 10 can have an additional arrangement to secure the rotor blade 5 to the blade shaft 10 so that a rotation of the rotor blade 5 is prevented during service work and exchange of the bearing pads 22, 26, 27.

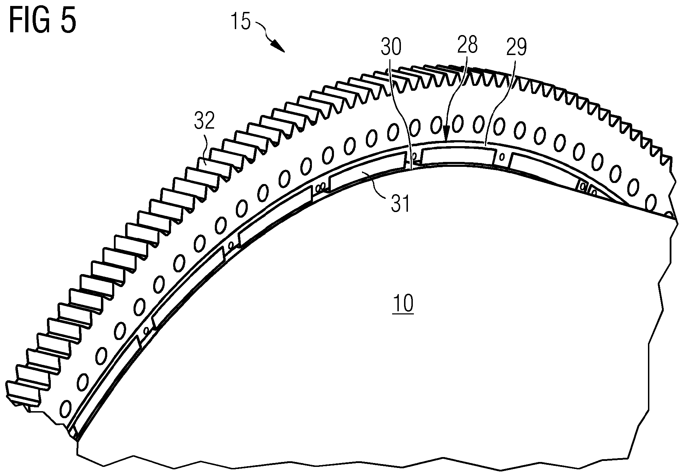

The floating bearing arrangement 15 is shown in detail in Fig. 5.

The floating bearing arrangement 15 is placed between the blade shaft 10 and the rotor blade 5. The floating bearing arrangement 15 comprises a radial bearing 28 for transferring radial forces. That means the radial bearing 28 can only transfer loads in the radial direction r but not in the axial direction a. The radial bearing 28 comprises a first bearing shell 29 and a second bearing shell 30 which can be part of the blade shaft 10.

Between the bearing shells 29, 30 is arranged a plurality of exchangeable bearing pads 31. The bearing pads 31 can be made of the same material like the bearing pads 22, 26, 27. The first bearing shell 29 is attached to the blade root 8. The first bearing shell 29 can be divided into segments to allow an easy exchange of the bearing pads 31 and/or the segments of the first bearing shell 29. The radial bearing 28 can have a diameter of more than 4 m and a length of more than 10 cm, preferably of more than 25 cm. The first bearing shell 29 can be provided with a gear ring 32 which can be used to adjust the pitch angle of the rotor blade 5.

The advantages of the wind turbine 1 comprising the blade arrangement 9 are the following. A better distribution of the loads is achieved. Less material is needed in the blade root 8 and in the bearing arrangements 14, 15. The exchangeable bearing pads 22, 26, 27, 31 secure a longer overall lifetime of the wind turbine 1 or the blade arrangement 9. The serviceability is better compared to bearings with rolling elements. At rotor blades 5 with 100 m length several meters of deflection at the tip of the rotor blade 5 are expected. This leads to high forces at the blade root 8 and to a high misalignment in bearings at the blade shaft 10. Plain bearings like the bearings 16, 17, 18, 28 are less sensitive to this misalignment.

Although the present invention has been described in accordance with preferred embodiments, it is obvious for the person skilled in the art that modifications are possible in all embodiments.

## Claims

1. A wind turbine (1), comprising a hub (6), a blade shaft (10) which is connected to the hub (6), a rotor blade (5) which is connected to the blade shaft (10), a fixed bearing arrangement (14) which is arranged at a blade end (12) of the blade shaft (10), and a floating bearing arrangement (15) which is arranged at a hub end (11) of the blade shaft (10), wherein the bearing arrangements (14, 15) enable a rotational movement of the rotor blade (5) relative to the blade shaft (10), **characterized in that** a first bearing shell (29) of the floating bearing arrangement (15) is provided with a gear ring (32) which can be used to adjust a pitch angle of the rotor blade (5), the fixed bearing arrangement (14) comprises a radial bearing (16) for transferring radial forces, and an axial bearing (17, 18) for transferring axial forces, and the radial bearing (16) and/or the axial bearing (17, 18) comprises exchangeable bearing pads (22, 26, 27).

2. The wind turbine according to claim 1, wherein the fixed bearing arrangement (14) is positioned between the blade shaft (10) and the rotor blade (5), and the floating bearing arrangement (15) is also positioned between the blade shaft (10) and the rotor blade (5).

3. The wind turbine according to claim 2, wherein the radial bearing (16) comprises a first bearing shell (20) that is connected to an adaptor wall (19) of the rotor blade (5), and a second bearing shell (21) that is connected to the blade shaft (10).

4. The wind turbine according to one of claims 1 to 3, wherein the radial bearing (16) and/or the axial bearing (17, 18) is a plain bearing.

5. The wind turbine according to one of claims 1 to 4, wherein the radial bearing (16) has a diameter of more than 50 cm.

6. The wind turbine according to one of claims 1 to 5, wherein the axial bearing (17, 18) has a length of more than 5 cm.

7. The wind turbine according to one of claims 1 to 6, wherein the floating bearing arrangement (15) comprises a radial bearing (28) for transferring radial forces.

8. The wind turbine according to claim 7, wherein the radial bearing (28) comprises exchangeable bearing pads (31).

9. The wind turbine according to claim 7 or 8, wherein the radial bearing (28) is a plain bearing.

10. The wind turbine according to one of claims 7 to 9, wherein the radial bearing (28) has a diameter of more than 4 m.

11. The wind turbine according to one of claims 1 to 10, wherein the blade shaft (10) is hollow and/or wherein the blade shaft (10) is conical.

12. The wind turbine according to one of claims 1 to 11, wherein the blade shaft (10) is arranged at least partly inside the rotor blade (5).

13. The wind turbine according to one of claims 1 to 12, wherein the fixed bearing arrangement (14) and/or the floating bearing arrangement (15) comprises copper, nylon or composite materials and/or wherein the fixed bearing arrangement (14) and/or the floating bearing arrangement (15) is lubricated.

## Patentansprüche

1. Windturbine (1) mit einer Nabe (6), einer mit der Nabe (6) verbundenen Blattwelle (10), einem mit der Blattwelle (10) verbundenen Rotorblatt (5), einer an einem Blattende (12) der Blattwelle (10) angeordneten Festlageranordnung (14) und einer an einem Nabenende (11) der Blattwelle (10) angeordneten Loslageranordnung (15), wobei die Lageranordnungen (14, 15) eine Drehbewegung des Rotorblatts (5) in Bezug zur Blattwelle (10) ermöglichen, **dadurch gekennzeichnet, dass**
eine erste Lagerschale (29) der Loslageranordnung (15) mit einem Zahnkranz (32) versehen ist, der zum Verstellen eines Anstellwinkels des Rotorblatts (5) benutzt werden kann,
die Festlageranordnung (14) ein Radiallager (16) zum Übertragen von Radialkräften und ein Axiallager (17, 18) zum Übertragen von Axialkräften umfasst und das Radiallager (16) und/oder das Axiallager (17, 18) austauschbare Lagersegmente (22, 26, 27) umfasst.

2. Windturbine nach Anspruch 1, wobei die Festlageranordnung (14) zwischen der Blattwelle (10) und dem Rotorblatt (5) und die Loslageranordnung (15) ebenfalls zwischen der Blattwelle (10) und dem Rotorblatt (5) positioniert ist.

3. Windturbine nach Anspruch 2, wobei das Radiallager (16) eine mit einer Adapterwand (19) des Rotorblatts (5) verbundene erste Lagerschale (20) und eine mit der Blattwelle (10) verbundene zweite Lagerschale (21) umfasst.

4. Windturbine nach einem der Ansprüche 1 bis 3, wobei es sich bei dem Radiallager (16) und/oder bei dem Axiallager (17, 18) um ein Gleitlager handelt.

5. Windturbine nach einem der Ansprüche 1 bis 4, wobei das Radiallager (16) einen Durchmesser von mehr als 50 cm aufweist.

6. Windturbine nach einem der Ansprüche 1 bis 5, wobei das Axiallager (17, 18) eine Länge von mehr als 5 cm aufweist.

7. Windturbine nach einem der Ansprüche 1 bis 6, wobei die Loslageranordnung (15) ein Radiallager (28) zum Übertragen von Radialkräften umfasst.

8. Windturbine nach Anspruch 7, wobei das Radiallager (28) austauschbare Lagersegmente (31) umfasst.

9. Windturbine nach Anspruch 7 oder 8, wobei es sich bei dem Radiallager (28) um ein Gleitlager handelt.

10. Windturbine nach einem der Ansprüche 7 bis 9, wobei das Radiallager (28) einen Durchmesser von mehr als 4 m aufweist.

11. Windturbine nach einem der Ansprüche 1 bis 10, wobei die Blattwelle (10) hohl und/oder konisch ist.

12. Windturbine nach einem der Ansprüche 1 bis 11, wobei die Blattwelle (10) zumindest teilweise in dem Rotorblatt (5) angeordnet ist.

13. Windturbine nach einem der Ansprüche 1 bis 12, wobei die Festlageranordnung (14) und/oder die Loslageranordnung (15) Kupfer, Nylon oder Verbundmaterialien umfasst und/oder wobei die Festlageranordnung (14) und/oder die Loslageranordnung (15) geschmiert ist.

## Revendications

1. Éolienne (1), comprenant un moyeu (6), un arbre de pale (10) qui est relié au moyeu (6), une pale de rotor (5) qui est reliée à l'arbre de pale (10), un agencement de palier fixe (14) qui est agencé au niveau d'une extrémité de pale (12) de l'arbre de pale (10), et un agencement de palier flottant (15) qui est agencé au niveau d'une extrémité de moyeu (11) de l'arbre de pale (10), dans laquelle les agencements de palier (14, 15) permettent un mouvement de rotation de la pale de rotor (5) par rapport à l'arbre de pale (10),
**caractérisée en ce que**
une première coque de palier (29) de l'agencement de palier flottant (15) est pourvue d'une couronne dentée (32) qui peut être utilisée pour régler un angle de pas de la pale de rotor (5),
l'agencement de palier fixe (14) comprend un palier radial (16) pour transférer des forces radiales, et un palier axial (17, 18) pour transférer des forces axiales, et
le palier radial (16) et/ou le palier axial (17, 18) comprend/comprennent des coussinets de palier échangeables (22, 26, 27).

2. Éolienne selon la revendication 1, dans laquelle l'agencement de palier fixe (14) est positionné entre l'arbre de pale (10) et la pale de rotor (5), et l'agencement de palier flottant (15) est également positionné entre l'arbre de pale (10) et la pale de rotor (5).

3. Éolienne selon la revendication 2, dans laquelle le palier radial (16) comprend une première coque de palier (20) qui est reliée à une paroi d'adaptation (19) de la pale de rotor (5), et une deuxième coque de palier (21) qui est reliée à l'arbre de pale (10).

4. Éolienne selon l'une des revendications 1 à 3, dans laquelle le palier radial (16) et/ou le palier axial (17, 18) est/sont un palier lisse.

5. Éolienne selon l'une des revendications 1 à 4, dans laquelle le palier radial (16) a un diamètre supérieur à 50 cm.

6. Éolienne selon l'une des revendications 1 à 5, dans laquelle le palier axial (17, 18) a une longueur supérieure à 5 cm.

7. Éolienne selon l'une des revendications 1 à 6, dans laquelle l'agencement de palier flottant (15) comprend un palier radial (28) pour transférer des forces radiales.

8. Éolienne selon la revendication 7, dans laquelle le palier radial (28) comprend des coussinets de palier échangeables (31).

9. Éolienne selon la revendication 7 ou 8, dans laquelle le palier radial (28) est un palier lisse.

10. Éolienne selon l'une des revendications 7 à 9, dans laquelle le palier radial (28) a un diamètre supérieur à 4 m.

11. Éolienne selon l'une des revendications 1 à 10, dans laquelle l'arbre de pale (10) est creux et/ou dans laquelle l'arbre de pale (10) est conique.

12. Éolienne selon l'une des revendications 1 à 11, dans laquelle l'arbre de pale (10) est agencé au moins en partie à l'intérieur de la pale de rotor (5).

13. Éolienne selon l'une des revendications 1 à 12, dans laquelle l'agencement de palier fixe (14) et/ou l'agencement de palier flottant (15) comprend/comprennent du cuivre, du nylon ou des matériaux composites et/ou dans laquelle l'agencement de palier fixe (14) et/ou l'agencement de palier flottant (15) est/sont lubrifié(s).
